# EUROPEAN PATENT APPLICATION

(11) **EP 1 143 550 A1**
(43) Date of publication of application: **10.10.2001**
(21) Application number: 01108423.3
(22) Date of filing: 03.04.2001
(51) Int. Cl.: H01M 10/40

(54) **Nonaqueous electrolyte battery and nonaqueous electrolytic solution**

(30) Priority: 04.04.2000 JP 2000101942
(71) Applicant: MATSUSHITA ELECTRIC INDUSTRIAL CO., LTD., Kadoma-shi, Osaka 571-8501 (JP)
(72) Inventor: Ueda, Atsushi, Osaka-shi, Osaka 546-0003 (JP); Iwamoto, Kazuya, Sakai-shi, Osaka 593-8304 (JP); Yoshizawa, Hiroshi, Hirakata-shi, Osaka 573-0151 (JP)
(74) Representative: Grünecker, Kinkeldey, Stockmair & Schwanhäusser Anwaltssozietät

(57) **Abstract**

A nonaqueous electrolyte battery having excellent preservability may be obtained. The battery includes a positive electrode, a negative electrode, and nonaqueous electrolytic solution containing organic solvent and electrolytic salt dissolved in the organic solvent. Further, the battery includes a compound containing boron and silicon. Preferably, the nonaqueous electrolytic solution comprises organic solvent, electrolytic salt dissolved in the organic solvent, and a compound containing boron and silicon, which is added into the organic solvent.

## Description

### Field of the Invention

The present invention relates to a nonaqueous electrolyte battery.

### Background of the Invention

A conventional nonaqueous electrolyte battery comprises nonaqueous electrolytic solution having organic solvent and electrolytic salt. As the organic solvent, there are ethylene carbonate, propylene carbonate, butylene carbonate, dimethyl carbonate, diethyl carbonate, ethyl methyl carbonate, dipropyl carbonate, methyl propionate, tetrahydrofuran, 1, 3-dioxolane, 1, 2-dimethoxyethane and the like which are used in the form of an element or mixture. As the electrolyte, there are LiClO₄, LiBF₄, LiPF₆, LiCF₃SO₃, (CF₃SO₂)₂NLi and the like which are used in the form of an element or mixture. Particularly, carbonic acid esters as organic solvent, and LiPF₆ as electrolytic salt are mainly used. This is because these organic solvents are excellent in electric conductivity and very safe from the viewpoint of environmental protection.

However, when a battery formed by using nonaqueous electrolytic solution consisting of such organic solvent and electrolytic salt is preserved in a charged state, the electrode material will react with the organic solvent and electrolytic salt, causing the nonaqueous electrolytic solution to be decomposed. Accordingly, there is a tendency that the battery decreases in capacity during preservation. Particularly, in the case of a secondary battery using a carbon material as the negative electrode, the reduction reaction of the electrolytic solution is promoted at the negative electrode, and as a result, the above-mentioned tendency will become more significant.

The present invention is intended to provide a nonaqueous electrolyte battery with excellent preservability, which is able to suppress the deterioration of nonaqueous electrolytic solution during preservation of the battery, especially the reaction between the negative electrode and nonaqueous electrolytic solution.

### Summary of the Invention

A nonaqueous electrolyte battery of the present invention comprises:
a positive electrode;
a negative electrode; and
nonaqueous electrolytic solution having organic solvent and electrolytic salt dissolved in the organic solvent, and
further comprises:
   a compound containing boron (B) and silicon (Si).

The nonaqueous electrolytic solution of the present invention comprises:
organic solvent;
electrolytic salt dissolved in the organic solvent; and
a compound containing boron and silicon, in which the compound is added into the organic solvent.

With the above configuration, a nonaqueous electrolyte battery with excellent preservability may be obtained.

### Brief Description of the Drawings

Fig. 1 is a vertical sectional view of a cylindrical battery in an embodiment of the present invention.

Fig. 2 is a chart showing the relationship between the amount of additive added and the capacity recovery factor in a battery as defined in an embodiment of the present invention.

### Description of the Reference Numerals

1 Battery case
2 Sealing cap
3 Insulating packing
4 Electrode group
5 Positive electrode lead
6 Negative electrode lead
7 Insulating ring

### Detailed Description of the Invention

A nonaqueous electrolyte battery in an embodiment of the present embodiment comprises a positive electrode and a negative electrode, and nonaqueous electrolytic solution. The nonaqueous electrolyte battery includes a compound containing at least boron (B) and silicon (Si). When a compound containing at least boron and silicon exists in the battery, the compound forms a film on the surface of the negative electrode, and the film then formed serves to suppress the contact between the electrolytic solution and the negative electrode. As a result, the decomposition of the electrolytic solution on the negative electrode will be kept down.

Preferably, the compound containing at least boron and silicon is a compound having a B-O-Si group. In this configuration, when a compound having a B-O-Si group forms a film on the negative electrode, oxygen atoms with B-O-Si group cleaved positively react on the active site of the negative electrode. Accordingly, the active site of the negative electrode becomes less reactive, making it possible to further suppress the decomposition of the electrolytic solution on the negative electrode.

Preferably, the compound containing at least boron and silicon is a compound that: can be represented by the following chemical formula 1. In the chemical formula 1, each of R1, R2, R3, R4, R5, R6, R7, R8, R9 stands for nitrogen atom, halogen atom or alkyl group. The alkyl group is straight-chain or branched chain alkyl.

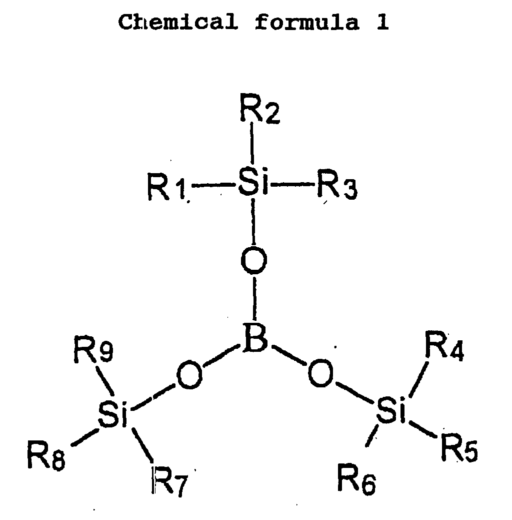

The compound of chemical formula 1 includes three B-O-Si groups. Therefore, the reactivity of the active site of the negative electrode is further efficiently suppressed. Specifically, such compound is, for example, tris-methylsilyl borate or tris-triethylsilyl borate. However, the compound used in the present embodiment, at least containing boron and silicon, is not limited to the two kinds of compound mentioned above but it is possible to use other compounds having chemical formula 1.

A nonaqueous electrolytic solution in an embodiment of the present invention comprises organic solvent, and electrolytic salt dissolved in the organic solvent. The organic solvent is preferable to be nonprotic organic solvent. As the nonprotic organic solvents used, there are cyclic carbonic acid esters, non-cyclic carbonic acid esters, aliphatic carboxylic acid esters, non-cyclic ethers, cyclic ethers, phosphoric esters, dimethylsulfoxide, 1,3-dioxolane, formamide, acetamide, dimethylformamide, dioxolane, acetonitrile, propylnitrile, nitromethane, ethylmonoglyme, trimethoxy methane, dioxolane derivative, sulfolane, methylsulfolane, 1,3-dimethyl-2-imidazolidinone, 3-methyl-2-oxazolidinon, propylene carbonate derivative, tetrahydrofuran derivative, ethyl ether, 1,3-propanesultone, anisole, dimethylsulfoxide, N-methylpyrrolindone, etc.

As the cyclic carbonic acid esters used, there are ethylene carbonate (EC), propylene carbonate (PC), butylene carbonate (BC), etc. As the non-cyclic carbonic acid esters used, there are dimethyl carbonate (DMC), diethyl carbonate (DEC), ethyl-methyl carbonate (EMC), dipropyl carbonate (DPC), etc. As the aliphatic carboxylic acid esters, for example, methyl formate, methyl acetate, methyl propionate, ethyl propionate, etc. are used. As the cyclic carboxylic acid esters, for example, γ-butyrolactone, γ-valerolactone, etc. are used. As the non-cyclic ethers used, there are 1, 2-dimethoxyethane (DME), 1, 2-diethoxyethane (DEE), ethoxymethoxyethane (EME), etc. As the cyclic ethers used, there are tetrahydrofuran, 2-methyl tetrahydrofuran, etc. As the phosphoric acid esters, for example, trimethyl phosphate and triethyl phosphate, etc. are used. The organic solvent contains one type of compound or mixture of two or more types out of these compounds. Preferably, the organic solvent contains at least one type of organic compound selected from the group consisting of carbonic acid esters, cyclic carboxylic acid esters and phosphoric acid esters. Further preferably, the organic solvent contains at least one type of organic compound selected from the group consisting of cyclic carboxylic acid esters and phosphoric acid esters. Because the ignition point and firing point of these compounds are very high, the battery will be improved with respect to safety.

As electrolytic salts which are soluble in these organic solvents, for example, LiClO₄, LiBF₄, LiPF₆, LiAlCl₄, LiSbF₆, LiSCN, LiCl, LiCF₃SO₃, LiCF₃CO₂, LiAsF₆, LiB₁₀Cl₁₀, lower aliphatic lithium carboxylate, LiCl, LiBr, LiI, chloroborane lithium, tetraphenyl lithium borate, salts having an imido- skeleton, and salts having a mecydo-skeleton are used. As salts having an imido-skeleton, for example, (C₂F₅SO₂)₂NLi, (CF₃SO₂)₂NLi, (CF₃SO₂)(C₄F₉SO₂)NLi, etc. are used. As salts having a mecydo-skeleton, for example, (CF₃SO₂)₃CLi, etc. are used. One type of electrolytic salt or electrolytic salts of two or more types out of these electrolytic salts are used as the electrolytic solution. Particularly, it is preferable to use electrolytic solution containing LiPF₆. The amount of dissolved lithium salt against nonaqueous solvent is not limited, but it is preferable, for example, to be in a range from 0.2 mol/1 to 2 mol/l (mole/liter). Particularly, it is preferable to be in a range from 0.5 mol/l to 1.5 mol/l.

Also, preferably, the electrolytic solution contains a compound having a halogen element. As the compound having a halogen element, for example, carbon tetrachloride and ethylene trifluoride are used. Thus, the electrolytic solution is given the property of being incombustible.

Also, preferably, the electrolytic solution contains carbonic acid gas. Thus, the electrolytic solution is given the property of being suitable for preservation at high temperatures.

Also used are organic solid electrolyte, gel electrolyte containing nonaqueous electrolytic solution as mentioned above. As the organic solid electrolyte, for example, polyethylene oxide, polypropylene oxide, polyphosphazene, polyaziridine, polyethylene sulfide, polyvinyl alcohol, polyvinylidene fluoride, polyhexafluoropropylene, derivative of these, mixture of these, and composite of these are used. Preferably, high molecular matrix materials are effective with respect to these materials. Particularly, it is preferable to use a copolymer of vinylidene fluoride and hexafluoropropylene or a mixture of vinylidene polyfluride and polyethlene oxide.

As the negative electrode material in the present embodiment, a compound that is capable of occlusion and emission of lithium ion is used. For example, as the negative electrode materials used, there are lithium, lithium alloy, alloy, intermetallic compound, carbon material, organic compound, inorganic compound, metal complex, organic high molecular compound, etc. which are used individually or in combination.

Particularly, when carbon material is used as the negative electrode material, the present invention will show remarkable advantages, greatly improving the preservability of the battery in particular. As the carbon material used, there are cokes, heat-decomposed carbons, natural graphite, man-made graphite, mesocarbon micro-beads, graphitized mesophase micro-beads, vapor phase growth carbon, glassy amorphous carbon, carbon formed of baked organic compound, etc. which are used individually or in combination. Particularly, it is preferable to use graphite material such as graphite material formed of graphitized mesophase micro-beads, natural graphite, man-made graphite, etc. Preferably, the content of the carbon material is 1% to 10% by weight.

As the active material for the positive electrode, it is generally possible to use material that can be used for a nonaqueous electrolyte battery. As the active material used for the positive electrode, there are, for example, LixCoO₂, LixNiO₂, LixMnO₂, and LixMn₂O₄ (0<x≤1.2).

The exemplary embodiments of the present invention will be described in the following.

### Exemplary embodiment 1:

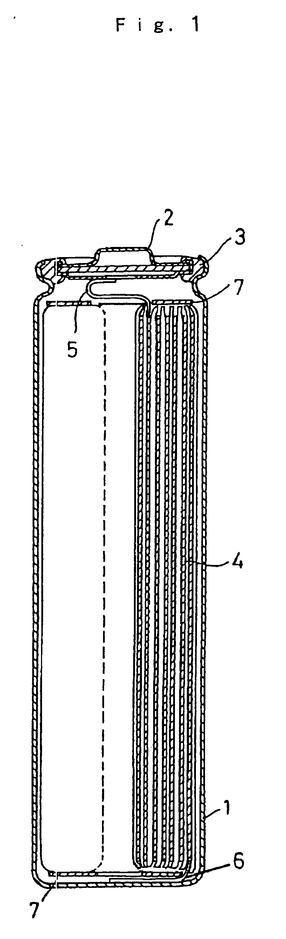

Fig. 1 is a vertical sectional view of a battery in this exemplary embodiment. In Fig. 1, the battery comprises a battery case 1, sealing cap 2, insulating packing 3, electrode group 4, and insulating ring 7.

The battery case 1 is formed by machining a stainless steel sheet having resistance to organic electrolytic solution. The sealing cap 2 has a safety valve. The electrode group 4 includes a positive electrode, a negative electrode, and a separator. The separator is located between the positive electrode and negative electrode. The positive electrode, negative electrode, and separator are spirally wound by a plurality of times. The electrode group 4 is housed in the case 1. Positive lead 5 is led out from the positive electrode, and the positive lead 5 is connected to the sealing cap 2. Negative lead 6 is led out from the negative electrode, and the negative electrode 6 is connected to the bottom of the battery case 1. The insulating ring 7 is disposed at the top and bottom of the electrode group 4.

Description will be made in further detail of the positive and negative electrodes in the following.

The positive electrode is made by the following method. First, Li₂CO₃ and Co₃O₄ are mixed. The mixture of these is burned at 900°C for 10 hours. In this way, LiCoO₂ is prepared synthetically. And, 100 parts by weight of LiCoO₂ powder, 3 parts by weight of acetylene black, and 7 parts by weight of fluororesin type binding agent are mixed. The mixture is suspended in carboxymethyl cellulose solution. Thus, positive electrode mixture paste is prepared. The positive electrode mixture paste is coated on an aluminum foil of 30 µm in thickness, and the paste is dried, and then rolled. In this way, a positive electrode of 0.18 mm in thickness, 37 mm in width, and 390 mm in length is formed.

The negative electrode is made by the following method. Mesophase micro-beads are graphitized at a temperature as high as 2800°C. In this way, mesophase graphite is prepared. And, 100 parts by weight of mesophase graphite and 5 parts by weight of styrene/butadiene rubber are mixed. The mixture is suspended in carboxmethyl cellulose solution. Thus, negative electrode mixture paste is prepared. The negative mixture paste is coated on both sides of a Cu foil of 0.02 mm in thickness, and the paste is dried, and then rolled. In this way, a negative electrode of 0.20 mm in thickness, 39 mm in width, and 420 mm in length is formed.

An aluminum lead is attached to the positive electrode. A nickel lead is attached to the negative electrode. In a state of a polypropylene separator being positioned between the positive and negative electrodes, the positive electrode, negative electrode and separator are spirally wound. The electrode group is housed in the battery case. The separator is 0.025 mm in thickness, 45 mm in width, and 950 mm in length. The battery case is cylindrical in shape, and its size is 17.0 mm in diameter and 50.0 mm in height.

The electrolytic solution used contains a solvent and electrolytic salt. In ratio by volume, 30 % of ethylene carbonate and 70 % of diethyl carbonate are mixed to make the solvent. And, 1 mol/liter of LiPF₆ is dissolved in the solvent, and tris-trimethylsilyl borate is further added thereto. In this way, the electrolytic solution is prepared. Incidentally, three types of electrolytic solutions different in content of tris-trimethylsilyl borate are prepared. That is, the prepared electrolytic solutions respectively contain 0.1% by weight, 0.5% by weight, and 1.0% by weight of tris-trimethylsilyl borate against 100% by weight of electrolytic solution. And, the respective electrolytic solutions are poured into battery cases respectively. After that, the battery case is closed with a sealing cap. Thus, cell 1, cell 2, and cell 3 which are different in content of tris-trimethylsilyl borate are formed.

### Exemplary embodiment 2:

Instead of tris-trimethylsilyl borate used for the battery in the above exemplary embodiment 1, tris-triethylsilyl borate is used to make cell 4, cell 5, and cell 6. That is, the prepared electrolytic solutions respectively contain 0.1% by weight, 0.5% by weight, and 1.0% by weight of tris-triethylsilyl borate against 100% by weight of electrolytic solution. Namely, the cell 4 has electrolytic solution containing a mixed solvent of ethylene carbonate and diethyl carbonate, LiPF₆, and 0.1% by weight of tris-triethylsilyl borate. The cell 5 has electrolytic solution containing a mixed solvent of ethylene carbonate and diethyl carbonate, LiPF₆, and 0.5% by weight of tris-triethylsilyl borate. The cell 6 has electrolytic solution containing a mixed solvent of ethylene carbonate and diethyl carbonate, LiPF₆, and 1.0% by weight of tris-triethylsilyl borate.

### Exemplary embodiment 3:

Instead of the electrolytic solution used for the battery in the above exemplary embodiment 1, the following electrolytic solutions are used. As the solvent, γ-butyrolactone is used. And, 1 mol/liter of LiPF₆ and a predetermined amount of tris-trimethylsilyl borate are dissolved in the solvent. That is, the prepared electrolytic solutions respectively contain 0.1% by weight, 0.5% by weight, and 1.0% by weight of tris-trimethylsilyl borate against 100% by weight of electrolytic solution. Namely, cell 7 has electrolytic solution containing a solvent of γ-butyrolactone, LiPF₆, and 0.1% by weight of tris-trimethylsilyl borate. Cell 8 has electrolytic solution containing a solvent of γ-butyrolactone, LiPF₆, and 0.5% by weight of tris-trimethylsilyl borate. Cell 9 has electrolytic solution containing a solvent of γ-butyrolactone, LiPF₆, and 1.0% by weight of tris-trimethylsilyl borate.

### Exemplary embodiment 4:

Instead of the electrolytic solution used for the battery in the above exemplary embodiment 1, the following electrolytic solutions are used. As the solvent, γ-butyrolactone is used. And, 1 mol/liter of LiPF₆ and a predetermined amount of tris-triethylsilyl borate are dissolved in the solvent. Three types of electrolytic solutions different in content of tris-triethylsilyl borate are prepared. That is, the prepared electrolytic solutions respectively contain 0.1% by weight, 0.5% by weight, and 1.0% by weight of tris-triethylsilyl borate against 100% by weight of electrolytic solution. Cell 10 has electrolytic solution containing a solvent of γ-butyrolactone, LiPF₆, and 0.1% by weight of tris-triethylsilyl borate. Cell 11 has electrolytic solution containing a solvent of γ-butyrolactone, LiPF₆, and 0.5% by weight of tris-triethylsilyl borate. Cell 12 has electrolytic solution containing a solvent of γ-butyrolactone, LiPF₆, and 1.0% by weight of tris-triethylsilyl borate.

### Exemplary embodiment 5:

As the solvent for the electrolytic solution, trimethyl phosphate is used. And, 1 mol/liter of LiPF₆ is dissolved in the trimethyl phosphate. Further, a predetermined amount of tris-trimethylsilyl borate is added to the electrolytic solution. Thus, cell 13, cell 14, and cell 15, using such electrolytic solution, are formed. That is, the cell 13 has electrolytic solution containing a solvent of trimethyl phosphate, LiPF₆, and 0.1% by weight of tris-trimethylsilyl borate. The cell 14 has electrolytic solution containing a solvent of trimethyl phosphate, LiPF₆, and 0.5% by weight of tris-trimethylsilyl borate. The cell 15 has electrolytic solution containing a solvent of trimethyl phosphate, LiPF₆, and 1.0% by weight of tris-trimethylsilyl borate.

### Exemplary embodiment 6:

As the solvent for the electrolytic solution, trimethyl phosphate is used. And, 1 mol/liter of LiPF₆ is dissolved in the trimethyl phosphate. Further, a predetermined amount of tris-triethylsilyl borate is added to the electrolytic solution. Thus, cell 16, cell 17, and cell 18, using such electrolytic solution, are formed. That is, the cell 16 has electrolytic solution containing a solvent of trimethyl phosphate, LiPF₆, and 0.1% by weight of tris-triethylsilyl borate. The cell 17 has electrolytic solution containing a solvent of trimethyl phosphate, LiPF₆, and 0.5% by weight of tris-triethylsilyl borate. The cell 18 has electrolytic solution containing a solvent of trimethyl phosphate, LiPF₆, and 1.0% by weight of tris-triethylsilyl borate.

### Comparative example 1:

Instead of the electrolytic solution in the above exemplary embodiment 1, electrolytic solution containing no tris-trimethylsilyl borate is used. The other configurations are same as in the exemplary embodiment 1. In this way, comparative cell 1 is prepared.

### Comparative example 2:

Instead of the electrolytic solution in the above exemplary embodiment 3, electrolytic solution containing no tris-trimethylsilyl borate is used. The other configurations are same as in the exemplary embodiment 3. In this way, comparative cell 2 is prepared.

### Comparative example 3:

Instead of the electrolytic solution in the above exemplary embodiment 5, electrolytic solution containing no tris-trimethylsilyl borate is used. The other configurations are same as in the exemplary embodiment 5. In this way, comparative cell 3 is prepared.

The cells 1 to 18 and comparative cells 1 to 3 formed as described above are respectively prepared by 5 cells each. Each battery is charged by constant voltage of restriction current 500mA under the conditions of ambient temperature 20°C, charging voltage 4.2V, and charging time 2 hours. With respect to each battery in a charged state, the discharge rate at 1A is measured. After that, the charged battery is subjected to the preservation test at 80°C for 5 days. Further, after the preservation test, the battery is charged under the same conditions as mentioned above, then discharged, and subjected to the measurement of capacity recovery factor. Here, **after-preservation capacity recovery factor = (after-preservation capacity / before-preservation capacity) × 100 (%).**

The results are shown in Table 1.

**Table 1**

| | Electrolytic solution | Additive (amounts) | After-preservation recovery factor |
|---|---|---|---|
| Cell 1 | 1.0M LiPF₆ EC/DEC (30/70) (Volume %) | Tris(trimethylsilyl) borate (0.1 wt%) | 79.3% |
| Cell 2 | | Tris(trimethylsilyl) borate (0.5wt%) | 83.9% |
| Cell 3 | | Tris(trimethylsilyl) borate (1.0wt%) | 90.2% |
| Cell 4 | | Tris(triethylsilyl) borate (0.1wt%) | 78.9% |
| Cell 5 | | Tris(triethylsilyl) borate (0.5wt%) | 83.2% |
| Cell 6 | | Tris(triethylsilyl) borate (1.0wt%) | 91.2% |
| Comparative Cell 1 | | None | 66.5% |
| Cell 7 | 1.0M LiPF₆ γ-butyrolactone | Tris(trimethylsilyl) borate (0.1wt%) | 83.5% |
| Cell 8 | | Tris(trimethylsilyl) borate (0.5wt%) | 85.8% |
| Cell 9 | | Tris(trimethylsilyl) borate (1.0wt%) | 86.2% |
| Cell 10 | | Tris(triethylsilyl) borate (0.1wt%) | 84.2% |
| Cell 11 | | Tris(triethylsilyl) borate (0.5wt%) | 85.5% |
| Cell 12 | | Tris(triethylsilyl) borate (1.0wt%) | 87.1% |
| Comparative Cell 2 | | None | 45.3% |
| Cell 13 | 1.0M LiPF₆ trimethyl phosphate | Tris(trimethylsilyl) borate (0.1wt%) | 79.7% |
| Cell 14 | | Tris(trimethylsilyl) borate (0.5wt%) | 80.1% |
| Cell 15 | | Tris(trimethylsilyl) borate (1.0wt%) | 80.8% |
| Cell 16 | | Tris(triethylsilyl) borate (0.1wt%) | 77.8% |
| Cell 17 | | Tris(triethylsilyl) borate (0.5wt%) | 81.6% |
| Cell 18 | | Tris(triethylsilyl) borate (1.0wt%) | 81.9% |
| Comparative Cell 3 | | None | 38.7% |

In Table 1, the cells 1 to 18 in the present exemplary embodiments are respectively showing over 70% of after-preservation recovery factor. On the other hand, the comparative cells 1 to 3 are respectively showing less than 70% of after-preservation recovery factor. That is, the electrolytic solution containing tris-trimethylsilyl borate or tris-triethylsilyl borate greatly enhances the after-preservation recovery factor of the battery. In other words, the electrolytic solution containing a compound shown by chemical formula 1 will remarkably improve the after-preservation recovery factor of the battery.

### Exemplary embodiment 7:

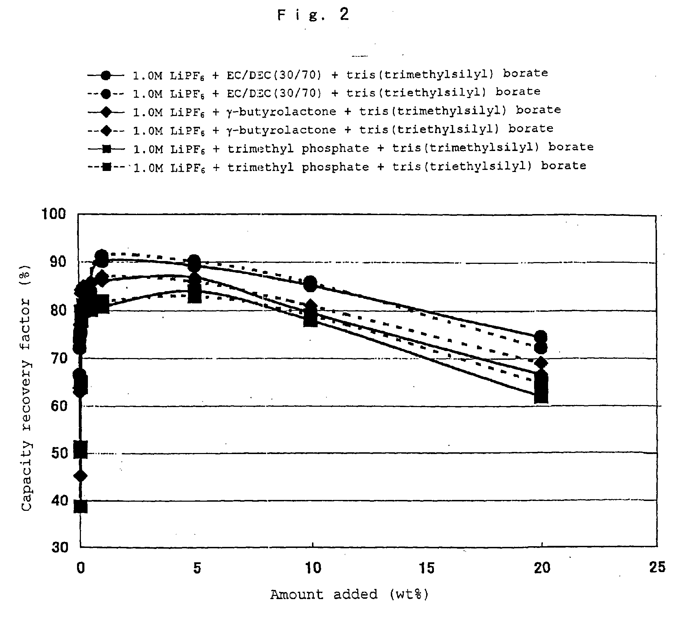

As for the experiments performed with respect to the relationship between the content of the compound (tris-trimentylsilyl borate or tris-triethylsilyl borate) of chemical formula 1, which is contained in the electrolytic solution, and the capacity recovery factor of the battery, the results are shown in Fig. 2. The electrolytic solution used in the experiment is prepared by the same method as for the exemplary embodiment 1 to exemplary embodiment 6. The prepared electrolytic solutions respectively contain 5% by weight, 10% by weight, and 20% by weight of tris-methylsilyl borate or tris-triethylsilyl borate. And cells having these respective electrolytic solutions are prepared. Thus, the after-preservation capacity recovery factor is measured with respective to each battery.

As is apparent in Fig. 2, electrolytic solution containing 0.01% by weight of the compound of chemical formula 1 greatly enhances the after-preservation capacity retention factor and remarkably improves the capacity recovery factor of the battery. However, when the compound of chemical formula 1 is over 20% by weight, the discharge characteristics of the battery begins to worsen. It is probably due to the reduction in electric conductivity of the electrolytic solution itself. Accordingly, the compound of chemical formula 1, which is contained in the electrolytic solution, is preferable to be less than 20% by weight.

As described above, when nonaqueous electrolytic solution comprises a compound containing boron "B" and silicon "Si", the compound forms a film on the surface of the negative electrode, and the film suppresses the contact between the electrolytic solution and the negative electrode. Thus, the electrolytic solution is restrained from being decomposed on the negative electrode. As a result, it is possible to obtain a reliable battery with excellent preservability.

## Claims

1. A nonaqueous electrolyte battery, comprising:
a positive electrode;
a negative electrode; and
nonaqueous electrolytic solution having organic solvent, and electrolytic salt dissolved in said organic solvent; and
further comprising:
a compound containing boron (B) and silicon (Si).

2. The nonaqueous electrolyte battery of claim 1,
wherein said compound containing boron and silicon is a compound structurally having B-O-Si group in its chemical formula.

3. The nonaqueous electrolyte battery of claim 1,
Wherein said compound containing boron and silicon is a compound that is represented by chemical formula 1, where each of R1, R2, R3, R4, R5, R6, R7, R8, R9 has at least one selected from the group consisting of nitrogen atom, halogen atom, straight-chain alkyl group, and branched alkyl group.

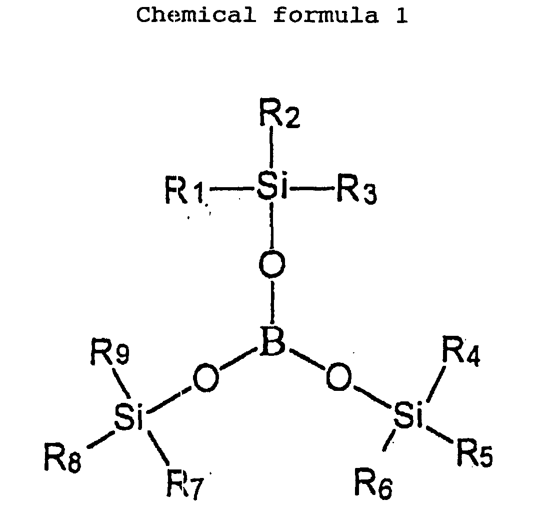

4. The nonaqueous electrolyte battery of claim 1,
Wherein said compound containing boron and silicon is added into said nonaqueous electrolytic solution.

5. A nonaqueous electrolyte battery, comprising:
a positive electrode;
a negative electrode; and
nonaqueous electrolytic solution having organic solvent, and electrolytic salt dissolved in said organic solvent; and
further comprising:
at least one of tris-trimethylsilyl borate and tris-triethylsilyl borate.

6. The nonaqueous electrolyte battery of claim 1 or 5,
wherein said organic solvent contains at least one selected from the group consisting of carbonic acid esters, cyclic carboxylic acid esters, and phosphoric acid esters.

7. The nonaqueous electrolyte battery of claim 1 or 5,
wherein the content of said compound containing boron and silicon is in a range from 0.01% by weight to less than 20% by weight against 100% by weight of said non aqueous electrolytic solution.

8. The nonaqueous electrolyte battery of claim 1 or 5,
wherein said negative electrode is formed of carbon material.

9. The nonaqueous electrolyte battery of claim 8,
wherein said carbon material includes a material prepared by graphitizing mesophase micro-beads at high temperatures.

10. The nonaqueous electrolyte battery of claim 5,
wherein at least one of said tris-trimethylsilyl borate and tris-triethylsilyl borate is added into said nonaqueous electrolytic solution.

11. A nonaqueous electrolytic solution, comprising:
organic solvent;
electrolytic salt dissolved in said organic solvent; and
a compound containing boron and silicon, said compound being added into said organic solvent.

12. The nonaqueous electrolytic solution of claim 11, wherein said compound containing boron and silicon is a compound having B-O-Si group.

13. The nonaqueous electrolytic solution of claim 11,
wherein said compound containing boron and silicon is a compound that is represented by chemical formula 1, where each of R1, R2, R3, R4, R5, R6, R7, R8, R9 has at least one selected from the group consisting of nitrogen atom, halogen atom, straight-chain alkyl group, and branched alkyl group.

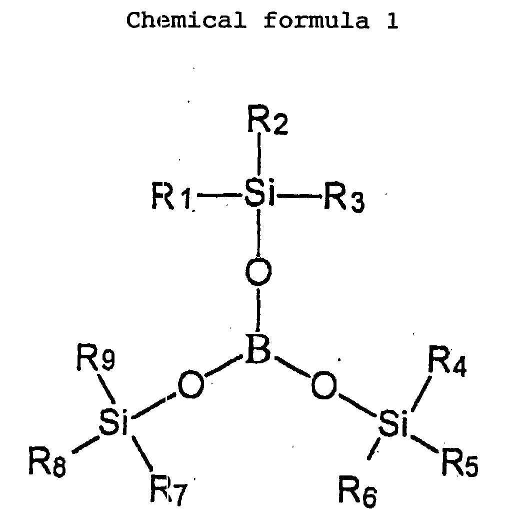

14. A nonaqueous electrolytic solution, comprising:
organic solvent;
electrolytic salt dissolved in said organic solvent; and
at least one of tris-trimethylsilyl borate and tris-triethylsisly borate, which is added into said organic solvent.

15. The nonaqueous electrolytic solution of claim 11 or 14, wherein said organic solvent contains at least one selected from the group consisting of carbonic acid esters, cyclic carboxylic acid esters, and phosphoric acid esters.

16. The nonaqueous electrolytic solution of claim 11 or 15, wherein the content of said compound containing boron and silicon is in a range from 0.01% by weight to less than 20% by weight against 100% by weight of non aqueous electrolytic solution.
